# DEMANDE DE BREVET EUROPEEN

(11) **EP 2 594 226 A1**
(43) Date de publication de la demande: **22.05.2013**
(21) Numéro de dépôt: 12306423.0
(22) Date de dépôt: 15.11.2012
(51) Int. Cl.: A61C 8/00

(54) **Implant dentaire pour implantation post-extractionnelle immédiate**

(30) Priorité: 15.11.2011 FR 1160382
(71) Demandeur: Fromental, Robert, 69370 Saint Cyr au Mont d'Or (FR)
(72) Inventeur: Fromental, Robert, 69370 Saint Cyr au Mont d'Or (FR)
(74) Mandataire: Thivillier, Patrick

(57) **Abrégé**

La présente invention concerne un comportant un corps central dit d'ancrage (1) de révolution apte à être implanté dans un trou pratiqué dans un os d'un patient, et un col implantaire (7) solidaire du corps d'ancrage (1) apte à recevoir un système prothétique, remarquable en ce que le corps d'ancrage (1) présente une première partie dite apicale (2) globalement conique s'évasant depuis son extrémité inférieure et une seconde partie dite supérieure (3) sensiblement tronconique prolongeant la partie apicale conique (2) et rétrécissant depuis l'extrémité supérieure de la partie apicale (2) qui présente un diamètre d₁ jusqu'à son extrémité supérieure qui présente un diamètre d₂ et en ce que la base du col implantaire (7) présente un diamètre d₃ inférieur au diamètre d₁ de l'extrémité supérieure de partie apicale (2) et au diamètre d₂ de l'extrémité supérieure tronconique (3) du corps d'ancrage (1) de telle manière que le rapport d₁/d₂ soit supérieur ou égal à 1,15, le rapport d₁/d₃ soit supérieur ou égal à 1,5 et le rapport d₂/d₃ soit supérieur ou égal à 1,3 afin de former un méplat annulaire (8) entre l'extrémité supérieure de la partie supérieure tronconique (3) du corps d'ancrage (1) et la base du col implantaire (7) et, le méplat annulaire (8) étant positionné sous la crête osseuse de la mâchoire du patient lors de la pose de l'implant, de créer un espace entre le col implantaire (7) et la paroi osseuse dans lequel un exsudat de sang et de particules osseuses peut s'épancher, ledit espace étant optionnellement comblé par un matériau de comblement osseux.

## Description

### DOMAINE DE L'INVENTION

La présente invention concerne le domaine des implants et plus particulièrement des implants dentaires utilisés pour la mise en place d'une ou plusieurs prothèses dentaires venant remplacer une ou plusieurs dents manquantes afin de redonner au patient, partiellement ou totalement édenté, une fonction de mastication et/ou un confort buccal et/ou un meilleur aspect esthétique et/ou une meilleure occlusion dentaire. L'invention concerne plus particulièrement un implant dentaire adapté à une mise en place post-extractionnelle et/ou pour un patient comportant une déficience osseuse en largeur de crête.

### ARRIÈRE PLAN DE L'INVENTION

Un implant dentaire consiste usuellement en un corps principal d'ancrage dit douille, muni d'un filetage extérieur et d'un taraudage intérieur, destinée à prendre place dans le maxillaire et/ ou la mandibule préalablement percé pour recevoir la douille. Le filetage extérieur est avantageusement auto-taraudant afin de permettre le vissage dans le puits de forage de la mâchoire prévu à cet effet, ledit filetage présentant un diamètre tout juste supérieur au diamètre du puits de forage.

La douille comporte à son extrémité dite supérieure, en contact avec le milieu buccal après implantation, un col implantaire apte à recevoir un système prothétique, communément appelé faux moignon pour la réalisation d'une prothèse dentaire scellée, ledit faux moignon étant solidarisé à l'implant au moyen du taraudage de la douille, ou une connectique apte à recevoir une prothèse dentaire dite vissée.

Il existe plusieurs procédures chirurgicales de mise en place des implants dentaires, la technique en deux temps chirurgicaux dite enfouie et la technique en un temps chirurgical dite non enfouie.

A chacune de ces techniques correspond un type d'implant.

Selon la technique dite enfouie, le chirurgien après avoir ouvert la gencive du patient prépare le puits de forage, communément appelé lit de l'implant, dans le maxillaire ou la mandibule du patient. Le chirurgien place ensuite l'implant constitué d'une douille globalement cylindrique puis il referme par des points de suture la gencive au dessus de l'implant. Cette étape d'enfouissement de l'implant sous la gencive consiste en une étape de mise en nourrice, pendant une durée comprise entre 3 à 6 mois, qui permet l'intégration de l'implant dans l'os. Après cette étape de 3 à 6 mois, une deuxième phase chirurgicale est nécessaire. Le chirurgien incise la gencive au dessus de la partie supérieure de l'implant pour mettre en place soit une pièce de cicatrisation soit directement un faux moignon soit une connectique pour prothèse vissée. Cette phase de cicatrisation permet de préparer le contour des tissus gingivaux. Après cicatrisation, généralement après 15 jours à 1 mois, la prothèse définitive est mise en place soit par scellement sur le faux moignon vissé à l'extrémité supérieure de la douille soit par vissage sur la connectique prévue à cet effet.

Cette technique chirurgicale, et les implants adaptés à cette technique, présentent l'inconvénient de nécessiter deux interventions chirurgicales et de grever considérablement le temps de mise en place de la prothèse dentaire définitive. De surcroît, un temps de reconstruction des maxillaires par greffe osseuse peut venir se grever à ce temps de mise en place de l'implant, une greffe osseuse pouvant être nécessaire si la zone d'implantation présente un os de volume insuffisant.

Afin de remédier à cet inconvénient, la mise en place de l'implant peut se faire en un seul temps chirurgical par la technique dite non enfouie. En effet, des études ont montré que des implants mis en place en un temps chirurgical pouvaient s'implanter dans l'os de la mâchoire avec le même succès que les implants posés en technique enfouie.

Dans la technique dite non enfouie, le chirurgien met en place l'implant consistant en une douille globalement cylindrique, conique, ou cylindro-conique munie d'un filetage et à l'extrémité supérieure de laquelle est situé un col implantaire apte à recevoir le système prothétique. La mise en place de l'implant s'effectue soit en ouvrant la gencive au dessus de la zone d'implantation soit en passant directement au travers de la gencive suivant la technique dite transmuqueuse puis en pratiquant un puits implantaire à la profondeur choisie en fonction du volume osseux du patient, la longueur de l'implant déterminant la profondeur dudit puits implantaire. Dans le cas de la mise en place de l'implant par incision de la gencive, ladite gencive, après la mise en place de l'implant, est refermée autour du col implantaire solidaire du corps de la douille par des points de suture (technique dite à lambeau), le col implantaire restant en contact avec le milieu buccal. Dans la technique de la mise en place de l'implant par la technique transmuqueuse, il n'est pas nécessaire de suturer la gencive qui s'adapte parfaitement autour du col implantaire en contact avec le milieu buccal. Le col implantaire est fermé par une vis de couverture pendant la phase de cicatrisation osseuse et gingivale. Après cette phase de cicatrisation d'une durée comprise entre 3 et 6 mois, la vis de fermeture est retirée pour mettre en place le système prothétique sur le col implantaire, le système prothétique étant adapté au type de concept prothétique choisi par le chirurgien telle qu'une prothèse dentaire scellée sur un faux moignon ou une prothèse vissée sur une connectique adaptée. On observera que la vis de fermeture présente une hauteur adaptée à la hauteur gingivale, usuellement de l'ordre de 1 ,5 mm à 2 mm. De tels implants sont par exemple décrits dans les demandes de brevet français FR 2 747 031, FR 2 747 032 et FR 2 709 660.

On connaît également la demande de brevet international WO 2006/008346 qui décrit un implant dentaire coronoradiculaire monobloc destiné à remplacer en un seul temps chirurgical et prothétique une dent naturelle. Ledit implant présente en continuité et rectitude une section intra-osseuse d'ancrage tronconique et une section intra-orale en forme de cupule, du fond de laquelle s'élève un fût coronaire. L'espace formé entre la cupule et le fût coronaire reçoit une coiffe de sorte que ledit espace est comblé lors de l'ostéo-intégration.

De manière similaire, la demande de brevet européen EP 0 997 112 décrit un ensemble d'implants dentaires comportant un corps d'ancrage fileté globalement tronconique muni à son extrémité supérieure d'une cupule et destiné à être inséré dans la paroi osseuse, prolongé par un hexagone, l'espace entre le corps d'ancrage et l'hexagone recevant une superstructure ou un composant secondaire qui prend appui sur la surface externe de la section conique de la gorge annulaire.

Ce type d'implant comportant une telle cupule procure, par son enfouissement partiel dans l'os, et par son différentiel de diamètre avec le fût coronaire, le maximum de latitude pour corriger l'axe implantaire et permet de réaliser un " effet cône Morse " de blocage antirotationnel avec la coiffe.

Toutefois, ce type d'implant ne permet pas d'améliorer significativement le maintien osseux après implantation.

On connait également la demande de brevet allemand DE 20 2007 004 943 qui décrit un implant comportant un corps central de révolution apte à être implanté dans un trou pratiqué dans un os d'un patient, et un col implantaire tronconique dont le diamètre diminue depuis l'extrémité supérieure du corps central à l'extrémité supérieur dudit col implantaire. Ledit col implantaire tronconique est solidaire du corps d'ancrage et est apte à recevoir un système prothétique.

Toutefois, la forme de ce type d'implant ne permet pas d'améliorer significativement le maintien osseux après implantation.

De nombreuses études ont montré que, dans la technique dite enfouie, après la mise en place de la connexion prothétique, il s'ensuivait une résorption osseuse d'environ 1 mm lors de la première année due au fait que l'os a tendance à recréer sa propre distance biologique après la jonction prothèse-implant, dans ce cas ladite jonction se faisant au niveau osseux. Cette résorption osseuse peut procurer une porte d'entrée microbienne qui selon le type de connexion prothétique permet une infiltration microbienne par manque d'herméticité entre le faux moignon ou la connectique prothétique et la douille de l'implant.

Dans la technique non enfouie, la jonction prothétique se situe à distance de l'os, à environ 1,5mm de ce dernier, permettant ainsi de respecter la distance biologique. La demande de brevet français FR 0852044 déposée par la demanderesse décrit un implant dentaire assurant le maintien osseux et par conséquent une stabilité des tissus mous péri-implantaires lors de la pose d'un implant en un temps chirurgical ou en deux temps chirurgicaux. Cet implant dentaire comporte un corps central dit d'ancrage de révolution apte à être implanté dans un trou pratiqué dans un os d'un patient, et un col implantaire solidaire du corps d'ancrage apte à recevoir un système prothétique. Le diamètre de la base du col implantaire est inférieur au diamètre de la génératrice de l'extrémité supérieure du corps d'ancrage afin de former un méplat entre l'extrémité supérieure du corps d'ancrage et la base du col implantaire afin de procurer une croissance et un maintien osseux autour du col implantaire après la mise en place de l'implant.

Par ailleurs, le méplat est incliné depuis la base du col implantaire vers la génératrice supérieure du corps d'ancrage en direction de l'extrémité inférieure dudit corps d'ancrage.

Ledit méplat est incliné suivant un angle inférieur ou égal à 45° par rapport à un plan orthogonal à l'axe de révolution du corps d'ancrage et du col implantaire, et de préférence suivant un angle compris entre 10° et 30°.

Bien que ce type d'implant améliore significativement le maintien osseux et par conséquent la stabilité des tissus mous péri-implantaires après l'implantation, il y a un besoin pour un implant améliorant la croissance osseuse après implantation.

En effet, la mise en place d'un implant de trop gros volume cervical par rapport à la longueur de la crête osseuse peut conduire à des pertes osseuses suite à la pose de l'implant par phénomène de compression dudit os et entraîner une rétraction de la gencive. Une telle rétraction de la gencive peut avoir pour conséquence une difficulté de maintien de l'hygiène et un aspect inesthétique gingival pouvant compromettre le rendu de la prothèse terminale et créer un inconfort pour le patient, notamment, comme il est précisé dans la publication «Analyses cone beam de l'épaisseur de l'os vestibulaire maxillaire antérieur après implantation : comparaison entre l'implantation immédiate et l'implantation différée ; Yasukazu Miyamoto ; Tadakazu Obama ; Ugo covani PDR n°6 ; vol 30 ; 2010 ; 561 à 567 *; Roberto comelini and coll »*.

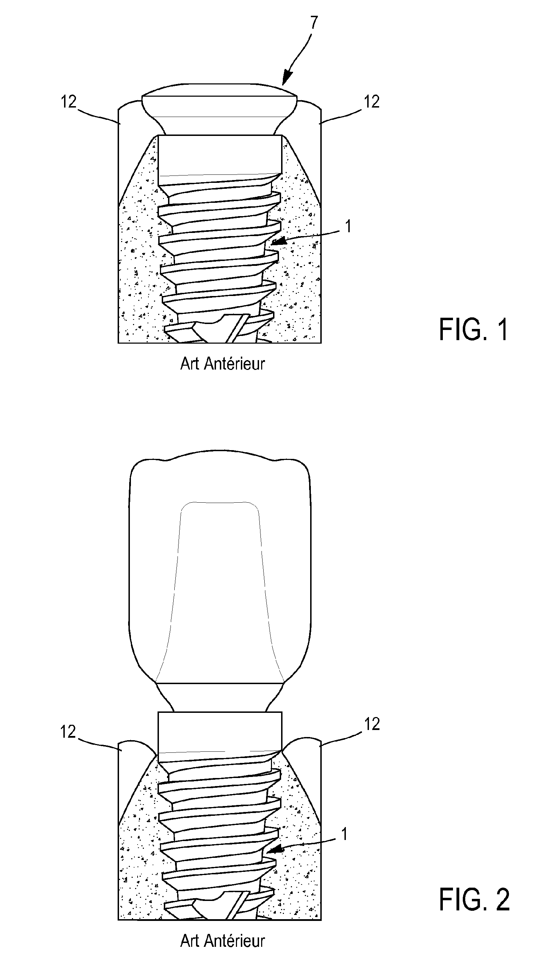

En référence à la figure 1, après avoir ouvert la gencive du patient, le praticien prépare un puits de forage, également appelé lit d'implant, dans la crête osseuse du maxillaire ou de la mandibule du patient puis il introduit la douille (1) tronconique d'un implant dit conventionnel. Il suture ensuite les tissus mous, à savoir la gencive (12) autour du col implantaire (7) de l'implant.

Après quelques semaines, en référence à la figure 2, une perte osseuse au niveau de la crête osseuse apparait, entrainant également une rétractation des tissus mous (12), comme il est précisé dans la publication «Analyses cone beam de l'épaisseur de l'os vestibulaire maxillaire antérieur après implantation : comparaison entre l'implantation immédiate et l'implantation différée ; Yasukazu Miyamoto ; Tadakazu Obama ; Ugo covani PDR n°6 ; vol 30 ; 2010 ; 561 à 567 *; Roberto comelini and coll »*. Cette perte osseuse et ce retrait des tissus mous (12) ont pour conséquence de mettre à nu l'extrémité supérieure de la douille (1) procurant un aspect inesthétique gingival pouvant compromettre l'aspect visuel de la prothèse terminale d'une part et l'hygiène dentaire d'autre part.

### BRÈVE DESCRIPTION DE L'INVENTION

L'un des buts de l'invention est donc de remédier à tous ces inconvénients en proposant un implant dentaire de conception simple et peu onéreuse permettant une implantation en un temps chirurgical ou en deux temps chirurgicaux et supprimant la compression osseuse par l'implant sur les berges de l'alvéole afin de permettre une réparation du type ostéo-captation de l'os en périphérie, une augmentation de la largeur osseuse au niveau de la crête résiduelle et du col de l'implant, et un respect de la distance biologique.

A cet effet et conformément à l'invention, il est proposé un implant comportant un corps central dit d'ancrage de révolution apte à être implanté dans un trou pratiqué dans un os d'un patient, et un col implantaire solidaire du corps d'ancrage apte à recevoir un système prothétique ; ledit implant est remarquable en ce que le corps d'ancrage présente une première partie dite apicale globalement conique s'évasant depuis son extrémité inférieure et une seconde partie dite supérieure sensiblement tronconique prolongeant la partie apicale conique et rétrécissant depuis l'extrémité supérieure de la partie apicale qui présente un diamètre d₁ jusqu'à son extrémité supérieure qui présente un diamètre d₂ et en ce que la base du col implantaire présente un diamètre d₃ inférieur au diamètre d₁ de l'extrémité supérieure de partie apicale et au diamètre d₂ de l'extrémité supérieure tronconique du corps d'ancrage de telle manière que le rapport d₁/d₂ soit supérieur ou égal à 1,15, le rapport d₁/d₃ soit supérieur ou égal à 1,5 et le rapport d₂/d₃ soit supérieur ou égal à 1,3 afin de former un méplat annulaire entre l'extrémité supérieure de la partie supérieure tronconique du corps d'ancrage et la base du col implantaire et, le méplat étant positionné sous la crête osseuse de la mâchoire du patient lors de la pose de l'implant, de créer un espace entre le col de l'implant et la paroi osseuse dans lequel un exsudat de sang et de particules osseuses peut s'épancher, ledit espace étant ultérieurement comblé par un matériau de comblement osseux.

Selon une caractéristique essentielle de l'implant suivant l'invention, la valeur de la distance séparant l'extrémité supérieure de la partie apicale de l'extrémité supérieure de la partie supérieure est comprise entre 0,65 et 1,75 fois le rapport d₁/d₂.

Par ailleurs, la paroi latérale de la partie supérieure tronconique du corps d'ancrage est concave et présente avantageusement un état de surface rugueux.

De plus, le col implantaire comporte une première partie dont la paroi externe s'évase depuis sa base en présentant une concavité et une seconde partie s'évasant en présentant une convexité.

Selon une variante d'exécution, le col implantaire comporte une première partie dont la paroi externe s'évase depuis sa base en présentant une concavité et une seconde partie tronconique se rétrécissant depuis la première partie jusqu'à son extrémité distale.

Par ailleurs, la partie apicale du corps d'ancrage consiste en une douille sensiblement conique et comportant au moins un filetage

Accessoirement, la douille présente entre deux filets successifs une paroi droite.

De préférence, les parois de la douille s'étendant entre deux filets successifs de la douille sont cylindriques.

Lesdits cylindres formant les parois de la douille s'étendant entre deux filets successifs présentent un diamètre décroissant depuis l'extrémité basale jusqu'à l'extrémité apicale de la douille.

### BRÈVE DESCRIPTION DES DESSINS

D'autres avantages et caractéristiques ressortiront mieux de la description qui va suivre de plusieurs variantes d'exécution, données à titre d'exemples non limitatifs, de l'implant conforme à l'invention, à partir des dessins annexés sur lesquels :
- la figure 1 est une vue de côté d'un implant conventionnel de l'art antérieur en Post-Extractionnel,
- la figure 2 est une de côté de l'implant conventionnel de l'art antérieur après mise en fonction
- les figures 3 à 7 sont des vues en coupe longitudinale des différentes étapes de pose de l'implant dentaire suivant l'invention dans un puits de forage pratiqué dans un maxillaire.

### DESCRIPTION DÉTAILLÉE DE L'INVENTION

On décrira dans cet exemple particulier, un implant dentaire destiné à être utilisé pour la mise en place d'une ou plusieurs prothèses dentaires venant remplacer une ou plusieurs dents manquantes ; toutefois, il est bien évident que l'implant suivant l'invention pourra être utilisé dans toute autre partie du corps sans pour autant sortir du cadre de l'invention.

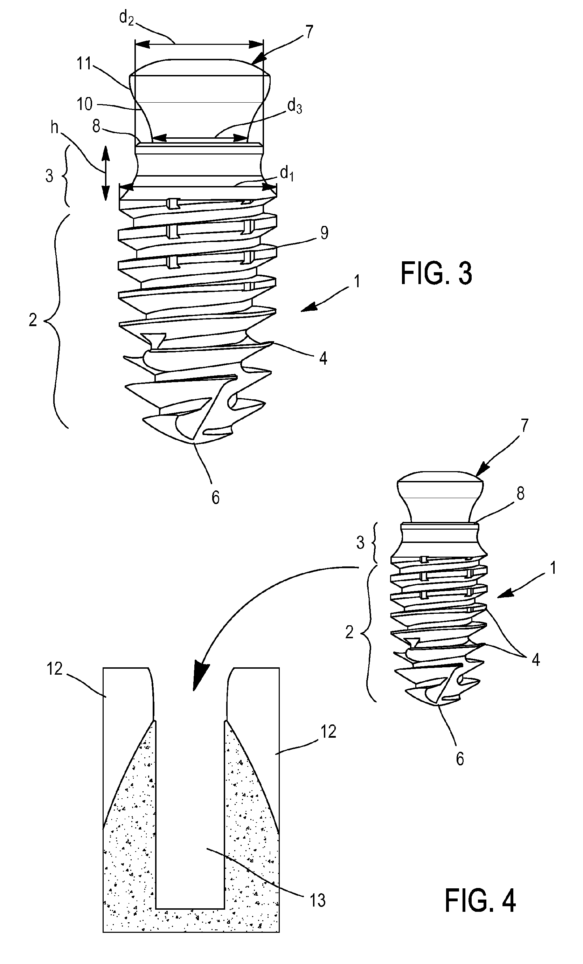

En référence à la figure 3, l'implant dentaire suivant l'invention est constitué d'un corps principal dit d'ancrage 1 se présentant sous la forme d'une douille 1 globalement conique comprenant une première partie inférieure dite apicale 2 conique s'évasant depuis son extrémité apicale et une seconde partie supérieure dite basale 3 tronconique prolongeant la partie apicale 2 conique et rétrécissant depuis l'extrémité supérieure de la partie apicale 2 jusqu'à son extrémité supérieure.

Cette douille 1 est, pour des raisons de clarté de la description, représentée verticalement et est destinée à prendre place dans le maxillaire et/ou la mandibule préalablement percé pour recevoir ladite douille 1 de telle manière que l'extrémité supérieure de ladite douille 1 soit légèrement enfouie sous le niveau osseux ou affleurante à l'os.

La partie apicale 2 conique de la douille 1 présente un filetage 4 et la partie supérieure 3 de ladite douille 1 présente une paroi latéral concave 5. La partie apicale 2 et la partie supérieure 3 de la douille 1 présentent une surface rugueuse et/ou poreuse afin de permettre une activation de l'ostéo-intégration après implantation.

L'état de surface de ladite douille 1 est de préférence sablé ou sablé mordancé ; toutefois, il va de soi qu'il pourra s'agir de tout autre état de surface similaire sans pour autant sortir du cadre de l'invention.

On notera que le filetage 4 du corps d'ancrage 1 forme des moyens aptes à râper les parois du trou pratiqué dans l'os et dans lequel est introduit le corps d'ancrage 1. Ainsi, lors de l'introduction du corps d'ancrage 1 dans le trou pratiqué à cet effet dans l'os du patient, ce filetage 4 râpe l'os pour procurer des particules osseuses qui se mélangent au liquide d'épanchement, ledit liquide d'épanchement étant essentiellement constitué de sang.

De manière avantageuse, la douille 1 présente une extrémité inférieure 6 légèrement arrondie permettant son utilisation dans les techniques chirurgicales du relèvement du plancher sinusal bien connu de l'Homme du Métier.

Accessoirement, la douille 1 présente entre deux filets successifs du filetage 4 une paroi droite. De préférence, les parois de la douille 1 s'étendant entre deux filets successifs de la douille 1 sont cylindriques. Lesdits cylindres formant les parois de la douille 1 s'étendant entre deux filets successifs présentent un diamètre décroissant depuis l'extrémité basale jusqu'à l'extrémité apicale de la douille 1.

Par ailleurs, l'implant comporte un col implantaire 7 s'étendant depuis l'extrémité supérieure de la douille 1, la douille 1 et le col implantaire 7 étant obtenus d'un seul tenant. Ce col implantaire 7 est issu de l'extrémité supérieure de la douille 1 en présentant une forme globalement conique, coaxiale à ladite douille 1, s'évasant depuis sa base, c'est-à-dire depuis l'extrémité supérieure de ladite douille 1.

La base du col implantaire 7 présente un diamètre d₃ inférieur au diamètre d₁ de l'extrémité supérieure de partie apicale 2 et au diamètre d₂ de l'extrémité supérieure tronconique 3 du corps d'ancrage 1 de telle manière que le rapport d₁/d₂ soit supérieur ou égal à 1,15, le rapport d₁/d₃ soit supérieur ou égal à 1,5 et le rapport d₂/d₃ soit supérieur ou égal à 1,3 afin de former un méplat annulaire 8 entre l'extrémité supérieure de la partie supérieure tronconique 3 du corps d'ancrage 1 et la base du col implantaire 7 et, le méplat annulaire 8 étant positionné sous la crête osseuse de la mâchoire du patient lors de la pose de l'implant, de créer un espace entre le col de l'implant 7 et la paroi osseuse dans lequel un exsudat de sang et d'éléments solides peut s'épancher, ledit espace étant ultérieurement comblé par un matériau de comblement osseux comme il sera détaillé plus loin.

De plus, la valeur de la distance h séparant l'extrémité supérieure de la partie apicale 2 de l'extrémité supérieure de la partie supérieure 3 est comprise entre 0,65 et 1,75 fois le rapport d₁/d₂. Dans cet exemple particulier de réalisation, cela correspond à une hauteur h de préférence comprise entre 0,8 et 2 mm.

On notera que les éléments solides pourront consister dans des éléments solides biologiques tels que des fragments d'os par exemple ou dans des éléments solides synthétiques tels que des éléments composites par exemple.

Ledit épanchement est guidé jusqu'au réservoir par le filetage 4 et/ou par des rainures longitudinales 9 pratiquées dans le filetage 4 et débouchant au niveau de la partie supérieure basale tronconique 3.

Ainsi, les particules osseuses, les ostéoblastes, les facteurs de croissance, etc... arrachés par le filetage 4 et transportés par le liquide d'épanchement jusqu'au niveau de la partie supérieure basale tronconique 3 et le méplat annulaire 8 forment des précurseurs de la reprise osseuse dans la zone péri-implantaire.

Par ailleurs, on observera que cette conception monobloc de la douille 1 et du col implantaire 7 évite la présence d'un joint dans la région critique pour l'os empêchant toute infiltration microbienne et représente une zone de prolifération et de densification pour les tissus mous.

Le col implantaire 7 comporte une première partie 10 dont la paroi externe s'évase depuis sa base en présentant une concavité orientée vers l'extérieur et une seconde partie 11 dont la paroi externe s'évase en présentant une convexité orientée vers l'extérieur. La paroi externe du col implantaire 7 présente un état de surface usiné globalement lisse ou non.

De plus, dans cet exemple particulier de réalisation, l'extrémité supérieure du col implantaire 7 présente un diamètre externe supérieur au diamètre externe d₂ de l'extrémité supérieure de la douille 1.

Selon une variante d'exécution, non représentée sur les figures, le col implantaire 7 pourra comporter une première partie dont la paroi externe s'évase depuis sa base en présentant une concavité et une seconde partie tronconique se rétrécissant depuis la première partie jusqu'à son extrémité distale.

Il est bien évident que le col implantaire pourra présenter une forme quelconque et comporter une connectique quelconque, interne ou externe, telle qu'une connectique interne en forme d'hexagone par exemple, sans pour autant sortir du cadre de l'invention.

On expliquera maintenant les différentes étapes de la pose de l'implant suivant l'invention en référence aux figures 4 à 7.

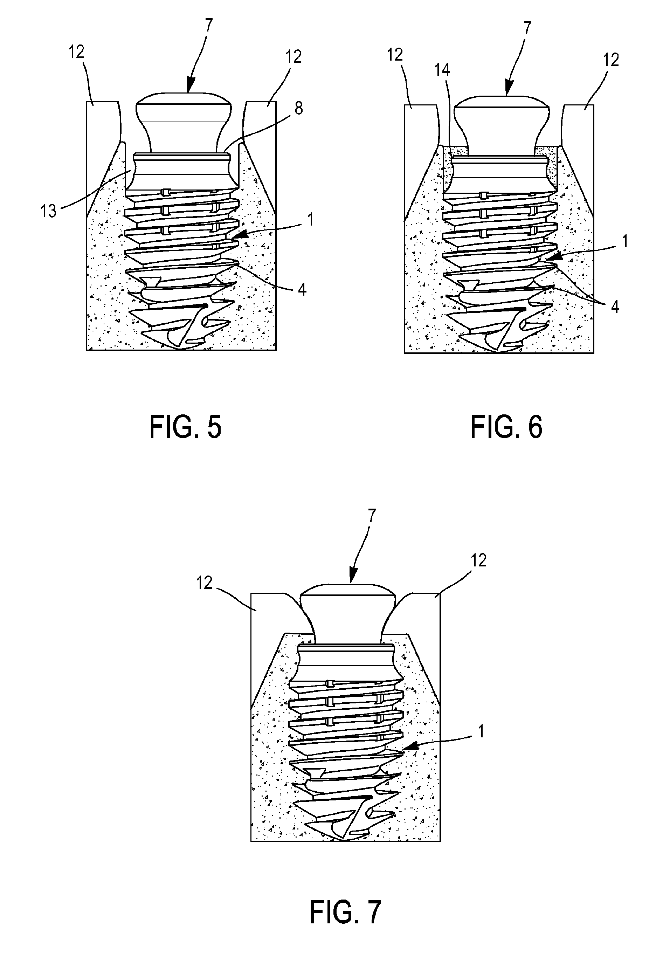

En référence à la figure 4, après avoir ouvert la gencive 12 du patient, le praticien prépare un puits de forage 13, communément appelé lit de l'implant, dans le maxillaire ou la mandibule du patient selon une technique bien connue de l'Homme du Métier, puis le chirurgien introduit la douille 1 dans le puits de forage 13 jusqu'à ce que l'extrémité supérieure de ladite douille 1, et le méplat annulaire 8, soient légèrement enfouie sous le niveau osseux tel que représenté sur la figure 5.

Lors de la mise en place de douille 1 dans le puits de forage 13, le filetage 4 joue le rôle d'une râpe à os procurant des particules osseuses qui viennent se mélanger au liquide d'épanchement. Ledit épanchement qui comporte des particules osseuses, des ostéoblastes, des facteurs de croissance, etc... est guidé par le filetage 4 et les rainures longitudinales 9 jusqu'à l'espace créé entre le col de l'implant 7 et la paroi osseuse du puits de forage 13. Les particules osseuses, les ostéoblastes, les facteurs de croissance, etc... contenus dans le réservoir formé par cet espace sont des précurseurs de la reprise osseuse dans la zone péri-implantaire. On notera que le méplat annulaire 8 constitue une rampe de croissance osseuse et permet une meilleure conservation de l'os dans la région péri-implantaire et par conséquent permet de maintenir les tissus mous péri-implantaires lors de la cicatrisation. De cette manière, après une période d'ostéo-intégration, en référence à la figure 6, une partie osseuse 14 s'est formée dans l'espace créé entre le col de l'implant 7 et la paroi osseuse du puits de forage 13, puis les tissus mous, i.e. la gencive 12, en référence à la figure 7, viennent prendre appui sur la première partie 10 du col implantaire 7, dont la paroi externe s'évase depuis sa base en présentant une concavité orientée vers l'extérieur, et sur la seconde partie 11 dudit col implantaire 7 dont la paroi externe s'évase en présentant une convexité orientée vers l'extérieur.

On observera que l'implant suivant l'invention permet une implantation en un temps chirurgical et supprime la compression osseuse par l'implant sur les berges de l'alvéole. L'absence de compression sur les berges de l'alvéole permet une réparation du type ostéo-captation de l'os en périphérie, une augmentation de la largeur osseuse au niveau de la crête résiduelle et du col de l'implant, et un respect de la distance biologique.

Ainsi, l'implant suivant l'invention permet une augmentation post-extractionnelle, ou dans des sites osseux insuffisamment cicatrisés, et une mise en charge immédiate ce qui raccourcit le temps d'attente pour les patients.

Alternativement, l'espace créé entre le col de l'implant 7 et la paroi osseuse du puits de forage 13 pourra être comblé par un matériau de comblement osseux bien connu de l'homme du métier sans sortir du cadre de l'invention.

De plus, il est bien évident que le corps d'ancrage 1 et le col implantaire 7 pourront être obtenus dans tout type de matériau implantable et biologiquement ostéo-intégrable bien connus de l'homme du métier tel que du métal, de la céramique ou un polymère par exemple.

Enfin, il va de soi que les exemples que l'on vient de donner ne sont que des illustrations particulières de l'invention et que le col implantaire 7 pourra comprendre des moyens de liaison mâle ou femelle quelconque, une bague de transfert, un porte-implant, un faux moignon et les différentes pièces d'un système de transfert comprenant des moyens de liaison femelles et respectivement mâles aptes à coopérer avec les moyens de liaison du col implantaire 7, sans pour autant sortir du cadre de l'invention.

## Revendications

1. - Implant comportant un corps central dit d'ancrage (1) de révolution apte à être implanté dans un trou pratiqué dans un os d'un patient, et un col implantaire (7) solidaire du corps d'ancrage (1) apte à recevoir un système prothétique, ***caractérisé* en ce que** le corps d'ancrage (1) présente une première partie dite apicale (2) globalement conique s'évasant depuis son extrémité inférieure et une seconde partie dite supérieure (3) sensiblement tronconique prolongeant la partie apicale conique (2) et rétrécissant depuis l'extrémité supérieure de la partie apicale (2) qui présente un diamètre d₁ jusqu'à son extrémité supérieure qui présente un diamètre d₂ et **en ce que** la base du col implantaire (7) présente un diamètre d₃ inférieur au diamètre d₁ de l'extrémité supérieure de partie apicale (2) et au diamètre d₂ de l'extrémité supérieure tronconique (3) du corps d'ancrage (1) de telle manière que le rapport d₁/d₂ soit supérieur ou égal à 1,15, le rapport d₁/d₃ soit supérieur ou égal à 1,5 et le rapport d₂/d₃ soit supérieur ou égal à 1,3 afin de former un méplat annulaire (8) entre l'extrémité supérieure de la partie supérieure tronconique (3) du corps d'ancrage (1) et la base du col implantaire (7) et, le méplat annulaire (8) étant positionné sous la crête osseuse de la mâchoire du patient lors de la pose de l'implant, de créer un espace entre le col implantaire (7) et la paroi osseuse dans lequel un exsudat de sang et de particules osseuses peut s'épancher, ledit espace étant optionnellement comblé par un matériau de comblement osseux.

2. - Implant suivant la revendication 1, ***caractérisé* en ce que** la valeur de la distance h séparant l'extrémité supérieure de la partie apicale (2) de l'extrémité supérieure de la partie supérieure (3) est comprise entre 0,65 et 1,75 fois le rapport d₁/d₂.

3. - Implant suivant l'une quelconque des revendications 1 ou 2, ***caractérisé* en ce que** la paroi latérale (5) de la partie supérieure tronconique (3) du corps d'ancrage est concave.

4. - Implant suivant la revendication 3, ***caractérisé* en ce que** la paroi concave (5) de la partie supérieure tronconique (3) du corps d'ancrage (1) présente un état de surface rugueux.

5. - Implant suivant l'une quelconque des revendications 1 à 4, ***caractérisé* en ce que** le col implantaire (7) comporte une première partie (10) dont la paroi externe s'évase depuis sa base en présentant une concavité et une seconde partie (11) s'évasant en présentant une convexité.

6. - Implant suivant l'une quelconque des revendications 1 à 5, ***caractérisé* en ce que** le col implantaire (7) comporte une première partie (10) dont la paroi externe s'évase depuis sa base en présentant une concavité et une seconde partie tronconique se rétrécissant depuis la première partie jusqu'à son extrémité distale.

7. - Implant suivant l'une quelconque des revendications 1 à 6, ***caractérisé* en ce que** le corps d'ancrage (1) consiste en une douille sensiblement conique et comportant au moins un filetage (4).

8. - Implant suivant la revendication 7, ***caractérisé* en ce que** la douille (1) présente entre deux filets successifs une paroi droite.

9. - Implant suivant la revendication 8, ***caractérisé* en ce que** les parois de la douille (1) s'étendant entre deux filets successifs de la douille sont cylindriques.

10. - Implant suivant la revendication 9, ***caractérisé* en ce que** les cylindres formant les parois de la douille (1) s'étendant entre deux filets successifs présentent un diamètre décroissant depuis l'extrémité basale jusqu'à l'extrémité apicale de la douille (1).
